# EUROPEAN PATENT APPLICATION

(11) **EP 4 550 612 A1**
(43) Date of publication of application: **07.05.2025**
(21) Application number: 23838541.3
(22) Date of filing: 17.05.2023
(51) Int. Cl.: H02J 7/00, B60L 50/60, B60L 53/22, H02M 3/04

(54) **POWER DRIVE CIRCUIT, SYSTEM AND METHOD, AND VEHICLE**

(30) Priority: 15.07.2022 CN 202210837589
(71) Applicant: BYD Company Limited, Shenzhen, Guangdong 518118 (CN)
(72) Inventor: YANG, Dongsheng, Shenzhen, Guangdong 518118 (CN); XUE, Penghui, Shenzhen, Guangdong 518118 (CN); WANG, Liang, Shenzhen, Guangdong 518118 (CN); ZHENG, Leping, Shenzhen, Guangdong 518118 (CN); ZHAO, Fulong, Shenzhen, Guangdong 518118 (CN)
(74) Representative: Taor, Simon Edward William
(86) International application number: PCT/CN2023/094881
(87) International publication number: WO 2024/012047

(57) **Abstract**

A power drive circuit, comprising: a battery pack, a first switch, a voltage adjustment circuit, a first bridge-arm conversion circuit and a second bridge-arm conversion circuit, wherein a first end of the voltage adjustment circuit is connected to a first end of the battery pack, and a second end of the voltage adjustment circuit is connected to a second end of the battery pack; the first switch is respectively connected to the first end of the battery pack and a third end of the voltage adjustment circuit; and both the first bridge-arm conversion circuit and the second bridge-arm conversion circuit are connected in parallel between the second end and the third end of the voltage adjustment circuit, the first bridge-arm conversion circuit is used for connecting to a first electric motor of a vehicle, and the second bridge-arm conversion circuit is used for connecting to a second electric motor of the vehicle.

## Description

### CROSS-REFERENCE TO RELATED APPLICATIONS

The present disclosure claims priority to and benefits of Chinese Patent Application No. 202210837589.5, entitled "POWER DRIVE CIRCUIT, SYSTEM AND METHOD, AND VEHICLE" filed on July 15, 2022. The entire content of the above-referenced application is incorporated herein by reference.

### FIELD

The present disclosure relates to the field of vehicle technologies, and specifically, to a power drive circuit, system and method, and a vehicle.

### BACKGROUND

An output power of a boost circuit of a new energy vehicle is usually less than a maximum output power of a battery pack. Due to a limitation of the output power of the boost circuit, the battery pack of the new energy vehicle cannot perform output at the maximum output power. As a result, dynamic performance of the new energy vehicle cannot be fully released. In most existing new energy vehicles, a small electricity supply apparatus or an energy storage device is newly added in the vehicle to improve the dynamic performance of the vehicle, for example, a supercapacitor is added. However, in this way, manufacturing costs and a volume of the vehicle are undoubtedly increased.

### SUMMARY

An objective of the present disclosure is to provide a power drive circuit, system and method, and a vehicle, to resolve the foregoing technical problem.

To achieve the objective, according to a first aspect, the present disclosure provides a power drive circuit, including: a battery pack, a first switch, a voltage adjustment circuit, a first bridge-arm conversion circuit, and a second bridge-arm conversion circuit. A first end of the voltage adjustment circuit is connected to a first end of the battery pack, and a second end of the voltage adjustment circuit is connected to a second end of the battery pack. The first switch is respectively connected to the first end of the battery pack and a third end of the voltage adjustment circuit. Both the first bridge-arm conversion circuit and the second bridge-arm conversion circuit are connected in parallel between the second end and the third end of the voltage adjustment circuit, the first bridge-arm conversion circuit is configured to connect to a first motor of a vehicle, and the second bridge-arm conversion circuit is configured to connect to a second motor of the vehicle.

Optionally, the first bridge-arm conversion circuit includes a first switching transistor, a second switching transistor, a third switching transistor, a fourth switching transistor, a fifth switching transistor, and a sixth switching transistor. An input end of the first switching transistor is connected to the third end of the voltage adjustment circuit, an output end of the first switching transistor is connected to an input end of the second switching transistor, an output end of the second switching transistor is connected to the second end of the voltage adjustment circuit, an input end of the third switching transistor is connected to the input end of the first switching transistor, an output end of the third switching transistor is connected to an input end of the fourth switching transistor, an output end of the fourth switching transistor is connected to the output end of the second switching transistor, an input end of the fifth switching transistor is connected to the input end of the first switching transistor, an output end of the fifth switching transistor is connected to an input end of the sixth switching transistor, and an output end of the sixth switching transistor is connected to the output end of the second switching transistor. A first electricity supply end of the first motor is connected to the output end of the first switching transistor, a second electricity supply end of the first motor is connected to the output end of the third switching transistor, and a third electricity supply end of the first motor is connected to the output end of the fifth switching transistor.

Optionally, the second bridge-arm conversion circuit includes a seventh switching transistor, an eighth switching transistor, a ninth switching transistor, a tenth switching transistor, an eleventh switching transistor, and a twelfth switching transistor. An input end of the seventh switching transistor is connected to the third end of the voltage adjustment circuit, an output end of the seventh switching transistor is connected to an input end of the eighth switching transistor, an output end of the eighth switching transistor is connected to the second end of the voltage adjustment circuit, an input end of the ninth switching transistor is connected to the input end of the seventh switching transistor, an output end of the ninth switching transistor is connected to an input end of the tenth switching transistor, an output end of the tenth switching transistor is connected to the output end of the eighth switching transistor, an input end of the eleventh switching transistor is connected to the input end of the seventh switching transistor, an output end of the eleventh switching transistor is connected to an input end of the twelfth switching transistor, and an output end of the twelfth switching transistor is connected to the output end of the eighth switching transistor. A first electricity supply end of the second motor is connected to the output end of the seventh switching transistor, a second electricity supply end of the second motor is connected to the output end of the ninth switching transistor, and a third electricity supply end of the second motor is connected to the output end of the eleventh switching transistor.

Optionally, the voltage adjustment circuit includes a thirteenth switching transistor, a fourteenth switching transistor, a fifteenth switching transistor, a sixteenth switching transistor, a first inductor, and a second inductor. An input end of the thirteenth switching transistor and/or an input end of the fifteenth switching transistor are/is configured as the third end of the voltage adjustment circuit, an output end of the thirteenth switching transistor is connected to an input end of the fourteenth switching transistor, an output end of the fourteenth switching transistor and/or an output end of the sixteenth switching transistor are/is configured as the second end of the voltage adjustment circuit, the input end of the fifteenth switching transistor is connected to the input end of the thirteenth switching transistor, an output end of the fifteenth switching transistor is connected to an input end of the sixteenth switching transistor, and the output end of the sixteenth switching transistor is connected to the output end of the fourteenth switching transistor. A first end of the first inductor is connected to the output end of the thirteenth switching transistor, a second end of the first inductor and/or a second end of the second inductor are/is configured as the first end of the voltage adjustment circuit, a first end of the second inductor is connected to the output end of the fifteenth switching transistor, and the second end of the second inductor is connected to the second end of the first inductor.

Optionally, the power drive circuit further includes a first capacitor. The first capacitor is connected in parallel between the second end and the third end of the voltage adjustment circuit.

Optionally, the power drive circuit further includes a pre-charging circuit and a second capacitor. The first end of the voltage adjustment circuit is connected to the first end of the battery pack through the pre-charging circuit, and the second capacitor is connected in parallel between the first end of the voltage adjustment circuit and the second end of the battery pack.

Optionally, the pre-charging circuit includes a second switch, a third switch, and a current limiting resistor. A first end of the second switch is configured as a first end of the pre-charging circuit, a second end of the second switch is configured as a second end of the pre-charging circuit, and a branch in which the third switch is connected in series with the current limiting resistor is connected in parallel to two ends of the second switch.

Optionally, the power drive circuit further includes a fuse. The fuse is connected in series between the first end of the battery pack and the first switch, and the first end of the voltage adjustment circuit is connected to an end of the fuse away from the first end of the battery pack.

According to a second aspect, the present disclosure provides a power drive system, including: an engine, a first motor, a second motor, and the power drive circuit according to the first aspect. The first motor is respectively connected to the second motor and the engine, and the second motor is connected to the engine.

According to a third aspect, the present disclosure provides a method for driving power, for controlling the power drive system according to the second aspect. The method includes:

Rotational speed information of the first motor, the second motor, and the engine that are in the power drive system is obtained;
a target traveling mode of a vehicle at a next moment is determined according to the rotational speed information; and
the first switch, the voltage adjustment circuit, the first bridge-arm conversion circuit, and the second bridge-arm conversion circuit that are in the power drive system are controlled, to enter the target traveling mode.

Optionally, the target traveling mode is a startup mode or a startup enhancement mode, and that the first switch, the voltage adjustment circuit, the first bridge-arm conversion circuit, and the second bridge-arm conversion circuit that are in the power drive system are controlled, to enter the target traveling mode includes:

The first switch is controlled to be turned on, the voltage adjustment circuit is controlled not to operate, and the first bridge-arm conversion circuit and the second bridge-arm conversion circuit are controlled to perform direct current to alternating current conversion, to enter the startup mode; or
the first switch is controlled to be turned on, the voltage adjustment circuit is controlled not to operate, the first bridge-arm conversion circuit is controlled to perform direct current to alternating current conversion, and the second bridge-arm conversion circuit is controlled to perform direct current to alternating current conversion or alternating current to direct current conversion, to enter the startup enhancement mode.

Optionally, the target traveling mode is a low-speed uniform traveling mode, a high-speed uniform traveling mode, an acceleration mode, or an acceleration enhancement mode, and that the first switch, the voltage adjustment circuit, the first bridge-arm conversion circuit, and the second bridge-arm conversion circuit that are in the power drive system are controlled, to enter the target traveling mode includes:
The first switch is controlled to be turned off, the voltage adjustment circuit is controlled to perform boosting, the first bridge-arm conversion circuit is controlled to perform direct current to alternating current conversion, and the second bridge-arm conversion circuit is controlled not to operate or perform direct current to alternating current conversion, to enter the low-speed uniform traveling mode; or
the first switch is controlled to be turned off, the voltage adjustment circuit is controlled to perform boosting, the first bridge-arm conversion circuit is controlled to perform direct current to alternating current conversion, and the second bridge-arm conversion circuit is controlled to perform direct current to alternating current conversion or alternating current to direct current conversion, to enter the high-speed uniform traveling mode; or
the first switch is controlled to be turned on, the voltage adjustment circuit is controlled not to operate, and the first bridge-arm conversion circuit and the second bridge-arm conversion circuit are controlled to perform direct current to alternating current conversion, to enter the acceleration mode; or
the first switch is controlled to be turned on, the voltage adjustment circuit is controlled not to operate, the first bridge-arm conversion circuit is controlled to perform direct current to alternating current conversion, and the second bridge-arm conversion circuit is controlled to perform direct current to alternating current conversion or alternating current to direct current conversion, to enter the acceleration enhancement mode.

Optionally, when the target traveling mode is a braking energy storage mode or a parking electricity generation mode, the method for driving power includes:
The first switch is controlled to be turned off, the voltage adjustment circuit is controlled to perform bucking, the first bridge-arm conversion circuit is controlled to perform alternating current to direct current conversion, and the second bridge-arm conversion circuit is controlled not to operate or perform alternating current to direct current conversion, to enter the braking energy storage mode; or
the first switch is controlled to be turned on, the voltage adjustment circuit is controlled not to operate, the first bridge-arm conversion circuit is controlled not to operate, and the second bridge-arm conversion circuit is controlled to perform alternating current to direct current conversion, to enter the parking electricity generation mode.

According to a fourth aspect, the present disclosure provides a vehicle, including:
a wheel; and
the power drive system according to the second aspect. The engine, the first motor, and the second motor that are in the power drive system are all connected to the wheel.

Optionally, the vehicle further includes a control apparatus, connected to the first switch, the voltage adjustment circuit, the first bridge-arm conversion circuit, and the second bridge-arm conversion circuit that are in the power drive system. The control apparatus is configured to control the first switch, the voltage adjustment circuit, the first bridge-arm conversion circuit, and the second bridge-arm conversion circuit.

According to the foregoing technical solutions, the first switch is arranged, and when the first switch is turned on, the battery pack can skip the voltage adjustment circuit and directly supply electricity to the first bridge-arm conversion circuit and the second bridge-arm conversion circuit, so that a large power output of the battery pack can be implemented, thereby improving dynamic performance of the vehicle. When the first switch is turned off, a voltage of the battery pack can be increased through the voltage adjustment circuit, thereby ensuring that the motors operate in a high-efficiency area and reducing energy consumption and losses.

Other features and advantages of the present disclosure will be described in detail in the following detailed description part.

### BRIEF DESCRIPTION OF THE DRAWINGS

The accompanying drawings are provided to further understand the present disclosure, and they constitute a part of the specification. The accompanying drawings, along with the specific implementations, are used to explain the present disclosure, and pose no limitation on the present disclosure. In the accompanying drawings:
FIG. 1 is a schematic diagram of a vehicle according to an exemplary embodiment.
FIG. 2 is a schematic diagram of a power drive circuit according to an exemplary embodiment.
FIG. 3 is another schematic diagram of a power drive circuit according to an exemplary embodiment.
FIG. 4 is a flowchart of a method for driving power according to an exemplary embodiment.
FIG. 5 to FIG. 12 are schematic diagrams of operation processes of a power drive system for different traveling modes according to exemplary embodiments.

**In the drawings:**
1-vehicle; 10-power drive system; 11-wheel; 101-engine; 102-first motor; 103-second motor; 104-power drive circuit; 201-battery pack; 202-first switch; 203-voltage adjustment circuit; 204-first bridge-arm conversion circuit; 205-second bridge-arm conversion circuit; 206-first capacitor; 207-second capacitor; 208-pre-charging circuit; 209-fuse; 301-thirteenth switching transistor; 302-fourteenth switching transistor; 303-fifteenth switching transistor; 304-sixteenth switching transistor; 305-first inductor; 306-second inductor; 401-first switching transistor; 402-second switching transistor; 403-third switching transistor; 404-fourth switching transistor; 405-fifth switching transistor; 406-sixth switching transistor; 501-seventh switching transistor; 502-eighth switching transistor; 503-ninth switching transistor; 504-tenth switching transistor; 505-eleventh switching transistor; 506-twelfth switching transistor; 601-second switch; 602-third switch; and 603-current limiting resistor.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

It should be noted that all actions of obtaining signals, information, or data in the present disclosure are performed under the premise of complying with corresponding data protection regulations and policies of a country and authorization granted by an owner of a corresponding apparatus.

New energy vehicles have three optimization directions: dynamic performance, economy, and convenience. Through research, the inventor discovers that the dynamic performance can be improved by increasing an output power, the economy can be improved by increasing a bus voltage, and the convenience can be improved by shortening charging time. For the dynamic performance, an output power of a boost circuit of an existing new energy vehicle cannot reach a maximum output power of a battery pack. Due to a limitation of the output power of the boost circuit, the battery pack of the new energy vehicle cannot perform output at the maximum output power. As a result, the dynamic performance of the new energy vehicle cannot be fully released.

To resolve the problem, an embodiment of the present disclosure provides a power drive circuit. The power drive circuit can improve dynamic performance, economy, and convenience of a vehicle. To improve the dynamic performance, a battery pack skips a voltage adjustment circuit, frees from a limitation of a power component in the voltage adjustment circuit, and directly supplies electricity to a first motor and a second motor, to improve an output power and an output current, and increase a torque of the first motor. This improves the dynamic performance. To improve the economy, a voltage of the battery pack is increased to a bus voltage (which refers to an output voltage between a second end and a third end of the voltage adjustment circuit in the present disclosure) through the voltage adjustment circuit, thereby ensuring that the motors operate in a high-efficiency area and reducing energy consumption and losses. In addition, electric energy is recycled to the battery pack during braking, thereby improving the economy. To improve the convenience, the battery pack is directly charged, to shorten charging time. This improves the convenience.

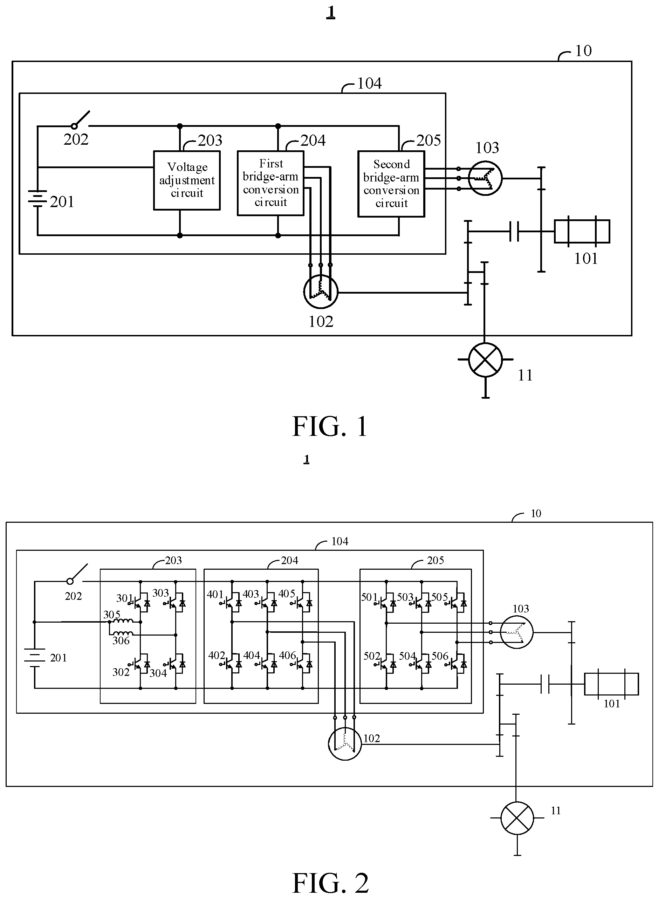

First, FIG. 1 is a schematic diagram of a vehicle according to an exemplary embodiment. Referring to FIG. 1, the vehicle 1 includes: a power drive system 10 and a wheel 11. The power drive system 10 is configured to drive the wheel 11 to rotate.

Optionally, as shown in FIG. 1, the power drive system 10 includes: an engine 101, a first motor 102, a second motor 103, and a power drive circuit 104. The engine 101, the first motor 102, and the second motor 103 that are in the power drive system 10 are all connected to the wheel 11. The first motor 102 is respectively connected to the second motor 103 and the engine 101, and the second motor 103 is connected to the engine 101.

The first motor 102 represents a driving motor, and the second motor 103 represents an electric generator. The first motor 102 and the second motor 103 may be connected through mechanical coupling, the first motor 102 and the engine 101 may be connected through mechanical coupling, and the second motor 103 and the engine 101 may be connected through mechanical coupling.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch. The first motor 102 and the second motor 103 are connected through the mechanical coupling and the clutch, the first motor 102 and the engine 101 are also connected through the mechanical coupling and the clutch, and the second motor 103 and the engine 101 are connected through the mechanical coupling.

Certainly, the present disclosure also does not exclude that the first motor 102 and the second motor 103 are connected in another connection manner, the first motor 102 and the engine 101 are connected in another connection manner, and the second motor 103 and the engine 101 are connected in another connection manner. The connection manners that enable the first motor 102, the second motor 103, and the engine 101 to drive the wheel 11 to rotate should be included in the present disclosure.

Optionally, as shown in FIG. 1, the power drive circuit 104 includes: a battery pack 201, a first switch 202, a voltage adjustment circuit 203, a first bridge-arm conversion circuit 204, and a second bridge-arm conversion circuit 205. A first end of the voltage adjustment circuit 203 is connected to a first end of the battery pack 201, and a second end of the voltage adjustment circuit 203 is connected to a second end of the battery pack 201; the first switch 202 is respectively connected to the first end of the battery pack 201 and a third end of the voltage adjustment circuit 203. Both the first bridge-arm conversion circuit 204 and the second bridge-arm conversion circuit 205 are connected in parallel between the second end and the third end of the voltage adjustment circuit 203, the first bridge-arm conversion circuit 204 is configured to connect to the first motor 102, and the second bridge-arm conversion circuit 205 is configured to connect to the second motor 103.

Optionally, the first end of the battery pack 201 represents a positive electrode of the battery pack 201, the second end of the battery pack 201 represents a negative electrode of the battery pack 201, the first motor 102 represents a driving motor, and the second motor 103 represents an electric generator.

Optionally, the vehicle 1 further includes: a control apparatus (not shown in the figure). The control apparatus is connected to the first switch 202, the voltage adjustment circuit 203, the first bridge-arm conversion circuit 204, and the second bridge-arm conversion circuit 205 that are in the power drive system 10. The control apparatus is configured to control the first switch 202, the voltage adjustment circuit 203, the first bridge-arm conversion circuit 204, and the second bridge-arm conversion circuit 205.

In the power drive system 10, the first switch 202, the voltage adjustment circuit 203, the first bridge-arm conversion circuit 204, and the second bridge-arm conversion circuit 205 are connected to the control apparatus. The control apparatus is configured to determine a target traveling mode of the vehicle 1 at a next moment, control the first switch 202 to be turned on or off, and control operating statuses of the voltage adjustment circuit 203, the first bridge-arm conversion circuit 204, and the second bridge-arm conversion circuit 205 according to the target traveling mode. For example, the control apparatus may control the voltage adjustment circuit 203 to perform boosting (boost a voltage provided by the battery pack) or bucking (buck a voltage provided by the first bridge-arm conversion circuit and/or the second bridge-arm conversion circuit). For another example, the control apparatus may further control the first bridge-arm conversion circuit 204 and the second bridge-arm conversion circuit 205 to operate or not to operate. Specifically, the control apparatus may control the first bridge-arm conversion circuit 204 and the second bridge-arm conversion circuit 205 to perform a forward operation (direct current to alternating current conversion) or a backward operation (alternating current to direct current conversion).

Specifically, if the first switch 202 is turned on, in this case, the battery pack 201 skips the voltage adjustment circuit 203 and directly supplies electricity to the first bridge-arm conversion circuit 204 and the second bridge-arm conversion circuit 205 through the turned-on first switch 202, to resolve a problem that dynamic performance of the vehicle is limited because an output power of the voltage adjustment circuit 203 is less than an output power of the battery pack 201, and increase the output power and a torque of the motor. The output power may be for measuring a highest speed of the vehicle, and the output power is positively correlated with the highest speed of the vehicle. The torque of the motor may be for measuring an acceleration capability of the vehicle, and the torque of the motor is positively correlated with acceleration performance of the vehicle. After the output power and the torque of the motor are increased, the dynamic performance of the vehicle is significantly improved.

Specifically, if the first switch 202 is turned off, in this case, the voltage adjustment circuit 203 may serve as a boost circuit or a buck circuit. When the voltage adjustment circuit 203 serves as the boost circuit, the voltage adjustment circuit 203 increases a voltage of the battery pack 201 to a bus voltage, and the battery pack 201 supplies electricity to the first bridge-arm conversion circuit 204 and the second bridge-arm conversion circuit 205. Increase of an output voltage of the voltage adjustment circuit 203 can ensure that the first motor 102 and the second motor 103 operate in a high-efficiency area, and reduce energy consumption and losses of the first motor 102 and the second motor 103. This improves economy of the vehicle. When the voltage adjustment circuit 203 serves as the buck circuit, after a bus voltage is reduced, a reduced bus voltage is outputted to the battery pack 201, the battery pack 201 is charged, stability of an output voltage is ensured, and energy recycling is implemented, thereby improving economy of the vehicle.

In an actual application scenario, the control apparatus may control on/off of the first switch 202, to control whether the battery pack 201 supplies electricity to the first bridge-arm conversion circuit 204 and the second bridge-arm conversion circuit 205 through the voltage adjustment circuit 203, so that the dynamic performance and the economy of the vehicle can be improved, and conversion between the dynamic performance and the economy can also be implemented.

FIG. 2 is a schematic diagram of a power drive circuit according to an exemplary embodiment. Referring to FIG. 2, the first bridge-arm conversion circuit 204 includes: a first switching transistor 401, a second switching transistor 402, a third switching transistor 403, a fourth switching transistor 404, a fifth switching transistor 405, and a sixth switching transistor 406. An input end of the first switching transistor 401 is connected to the third end of the voltage adjustment circuit 203, an output end of the first switching transistor 401 is connected to an input end of the second switching transistor 402, an output end of the second switching transistor 402 is connected to the second end of the voltage adjustment circuit 203, an input end of the third switching transistor 403 is connected to the input end of the first switching transistor 401, an output end of the third switching transistor 403 is connected to an input end of the fourth switching transistor 404, an output end of the fourth switching transistor 404 is connected to the output end of the second switching transistor 402, an input end of the fifth switching transistor 405 is connected to the input end of the first switching transistor 401, an output end of the fifth switching transistor 405 is connected to an input end of the sixth switching transistor 406, and an output end of the sixth switching transistor 406 is connected to the output end of the second switching transistor 402. A first electricity supply end of the first motor 102 is connected to the output end of the first switching transistor 401, a second electricity supply end of the first motor 102 is connected to the output end of the third switching transistor 403, and a third electricity supply end of the first motor 102 is connected to the output end of the fifth switching transistor 405.

Control ends of the first switching transistor 401, the second switching transistor 402, the third switching transistor 403, the fourth switching transistor 404, the fifth switching transistor 405, and the sixth switching transistor 406 are configured to connect to the control apparatus. The control apparatus controls on/off of each of the switching transistors through the control end of each of the switching transistors, to control the operating status of the first bridge-arm conversion circuit 204.

Optionally, each of the switching transistors in the first bridge-arm conversion circuit 204 may be an IGBT or an MOS transistor. If the switching transistor is the IGBT, the control end of each of the switching transistors is a gate, an input end is a collector, and an output end is an emitter. The IGBT is used as an example. The control apparatus sends a high level or a low level to the gate of each of the switching transistors to turn on or turn off each of the switching transistors correspondingly, so as to control the operating status of the first bridge-arm conversion circuit 204.

For example, the control apparatus sends the high level to the control ends of the first switching transistor 401, the third switching transistor 403, and the fifth switching transistor 405, to turn on the first switching transistor 401, the third switching transistor 403, and the fifth switching transistor 405, and sends the low level to the control ends of the second switching transistor 402, the fourth switching transistor 404, and the sixth switching transistor 406, to turn off the second switching transistor 402, the fourth switching transistor 404, and the sixth switching transistor 406, so as to enable the first bridge-arm conversion circuit 204 to operate. The control apparatus sends the low level to the control end of each of the switching transistors in the first bridge-arm conversion circuit 204, to turn off each of the switching transistors in the first bridge-arm conversion circuit 204, so as to enable the first bridge-arm conversion circuit 204 not to operate.

When the first bridge-arm conversion circuit 204 operates and obtains a voltage provided by the second end and the third end of the voltage adjustment circuit 203, the first bridge-arm conversion circuit 204 converts a direct current into a three-phase alternating current, and supplies electricity to the first motor 102 through the first electricity supply end, the second electricity supply end, and the third electricity supply end of the first motor 102. After obtaining the electricity, the first motor 102 drives the wheel 11 to rotate. When the first bridge-arm conversion circuit 204 operates and obtains a voltage provided by the first motor 102, the first bridge-arm conversion circuit 204 converts a three-phase alternating current into a direct current, to recycle electric energy to the battery pack 201.

Optionally, as shown in FIG. 2, the second bridge-arm conversion circuit 205 includes: a seventh switching transistor 501, an eighth switching transistor 502, a ninth switching transistor 503, a tenth switching transistor 504, an eleventh switching transistor 505, and a twelfth switching transistor 506. An input end of the seventh switching transistor 501 is connected to the third end of the voltage adjustment circuit 203, an output end of the seventh switching transistor 501 is connected to an input end of the eighth switching transistor 502, an output end of the eighth switching transistor 502 is connected to the second end of the voltage adjustment circuit 203, an input end of the ninth switching transistor 503 is connected to the input end of the seventh switching transistor 501, an output end of the ninth switching transistor 503 is connected to an input end of the tenth switching transistor 504, an output end of the tenth switching transistor 504 is connected to the output end of the eighth switching transistor 502, an input end of the eleventh switching transistor 505 is connected to the input end of the seventh switching transistor 501, an output end of the eleventh switching transistor 505 is connected to an input end of the twelfth switching transistor 506, and an output end of the twelfth switching transistor 506 is connected to the output end of the eighth switching transistor 502. A first electricity supply end of the second motor 103 is connected to the output end of the seventh switching transistor 501, a second electricity supply end of the second motor 103 is connected to the output end of the ninth switching transistor 503, and a third electricity supply end of the second motor 103 is connected to the output end of the eleventh switching transistor 505.

Control ends of the seventh switching transistor 501, the eighth switching transistor 502, the ninth switching transistor 503, the tenth switching transistor 504, the eleventh switching transistor 505, and the twelfth switching transistor 506 are configured to connect to the control apparatus. The control apparatus controls on/off of each of the switching transistors through the control end of each of the switching transistors, to control the operating status of the second bridge-arm conversion circuit 205.

Optionally, each of the switching transistors in the second bridge-arm conversion circuit 205 may be an IGBT or an MOS transistor. If the switching transistor is the IGBT, the control end of each of the switching transistors is a gate, an input end is a collector, and an output end is an emitter. The IGBT is used as an example. The control apparatus sends a high level or a low level to the gate of each of the switching transistors to turn on or turn off each of the switching transistors correspondingly, so as to control the operating status of the second bridge-arm conversion circuit 205.

For example, the control apparatus sends the high level to the control ends of the seventh switching transistor 501, the ninth switching transistor 503, and the eleventh switching transistor 505, to turn on the seventh switching transistor 501, the ninth switching transistor 503, and the eleventh switching transistor 505, and sends the low level to the control ends of the eighth switching transistor 502, the tenth switching transistor 504, and the twelfth switching transistor 506, to turn off the eighth switching transistor 502, the tenth switching transistor 504, and the twelfth switching transistor 506, so as to enable the second bridge-arm conversion circuit 205 to operate. The control apparatus sends the low level to the control end of each of the switching transistors in the second bridge-arm conversion circuit 205, to turn off each of the switching transistors in the second bridge-arm conversion circuit 205, so as to enable the second bridge-arm conversion circuit 205 not to operate.

When the second bridge-arm conversion circuit 205 operates and obtains a voltage provided by the second end and the third end of the voltage adjustment circuit 203, the second bridge-arm conversion circuit 205 converts a direct current into a three-phase alternating current, and supplies electricity to the second motor 103 through the first electricity supply end, the second electricity supply end, and the third electricity supply end of the second motor 103. After obtaining the electricity, the second motor 103 drives the wheel 11 to rotate or assists the engine 101 in operating. When the second bridge-arm conversion circuit 205 operates and obtains a voltage provided by the second motor 103, the second bridge-arm conversion circuit 205 converts a three-phase alternating current into a direct current, to recycle electric energy to the battery pack 201.

Optionally, as shown in FIG. 2, the voltage adjustment circuit 203 includes: a thirteenth switching transistor 301, a fourteenth switching transistor 302, a fifteenth switching transistor 303, a sixteenth switching transistor 304, a first inductor 305, and a second inductor 306. An input end of the thirteenth switching transistor 301 and/or an input end of the fifteenth switching transistor 303 are/is configured as the third end of the voltage adjustment circuit 203, an output end of the thirteenth switching transistor 301 is connected to an input end of the fourteenth switching transistor 302, an output end of the fourteenth switching transistor 302 and/or an output end of the sixteenth switching transistor 304 are/is configured as the second end of the voltage adjustment circuit 203, the input end of the fifteenth switching transistor 303 is connected to the input end of the thirteenth switching transistor 301, an output end of the fifteenth switching transistor 303 is connected to an input end of the sixteenth switching transistor 304, and the output end of the sixteenth switching transistor 304 is connected to the output end of the fourteenth switching transistor 302. A first end of the first inductor 305 is connected to the output end of the thirteenth switching transistor 301, a second end of the first inductor 305 and/or a second end of the second inductor 306 are/is configured as the first end of the voltage adjustment circuit 203, a first end of the second inductor 306 is connected to the output end of the fifteenth switching transistor 303, and the second end of the second inductor 306 is connected to the second end of the first inductor 305.

Because the input end of the thirteenth switching transistor 301 is connected to the input end of the fifteenth switching transistor 303, both the input end of the thirteenth switching transistor 301 and the input end of the fifteenth switching transistor 303 may be configured as the third end of the voltage adjustment circuit 203. Because the output end of the fourteenth switching transistor 302 is connected to the output end of the sixteenth switching transistor 304, both the output end of the fourteenth switching transistor 302 and the output end of the sixteenth switching transistor 304 may be configured as the third end of the voltage adjustment circuit 203.

Control ends of the thirteenth switching transistor 301, the fourteenth switching transistor 302, the fifteenth switching transistor 303, and the sixteenth switching transistor 304 are configured to connect to the control apparatus. The control apparatus controls on/off of each of the switching transistors through the control end of each of the switching transistors, to control the operating status of the voltage adjustment circuit 203.

Optionally, each of the switching transistors in the voltage adjustment circuit 203 may be an IGBT or an MOS transistor. If the switching transistor is the IGBT, the control end of each of the switching transistors is a gate, an input end is a collector, and an output end is an emitter. The IGBT is used as an example. The control apparatus sends a high level or a low level to the gate of each of the switching transistors to turn on or turn off each of the switching transistors correspondingly, so as to control the operating status of the voltage adjustment circuit 203.

When operating, the voltage adjustment circuit 203 may serve as a boost circuit or a buck circuit. For a specific function of serving as the boost circuit or the buck circuit, reference may be made to the foregoing descriptions. Details are not described herein again.

For example, the control apparatus sends the high level to the control ends of the thirteenth switching transistor 301 and the sixteenth switching transistor 304, to turn on the thirteenth switching transistor 301 and the sixteenth switching transistor 304, and sends the low level to the control ends of the fourteenth switching transistor 302 and the sixteenth switching transistor 304, to turn off the fourteenth switching transistor 302 and the fifteenth switching transistor 303, so as to enable the voltage adjustment circuit 203 to operate. The control apparatus sends the low level to the control end of each of the switching transistors in the voltage adjustment circuit 203, to turn off each of the switching transistors in the voltage adjustment circuit 203, so as to enable the voltage adjustment circuit 203 not to operate.

In addition, a two-phase interleaved and parallel structure is used as the structure of the voltage adjustment circuit 203. The two-phase interleaved and parallel structure may enable the output power of the voltage adjustment circuit 203 to reach 40 kW and have a smaller ripple, while a boost circuit on the market has an output power less than 40 kW and has a larger ripple.

Therefore, the voltage adjustment circuit 203 of the two-phase interleaved and parallel structure is used. When the voltage adjustment circuit 203 is configured as the boost circuit, an output power of the boost circuit can be increased, and the battery pack 201 performs output at a maximum output power, so that it is ensured that the first motor 102 and the second motor 103 operate in the high-efficiency area, and energy consumption and losses of the first motor 102 and the second motor 103 are reduced, thereby improving the economy of the vehicle.

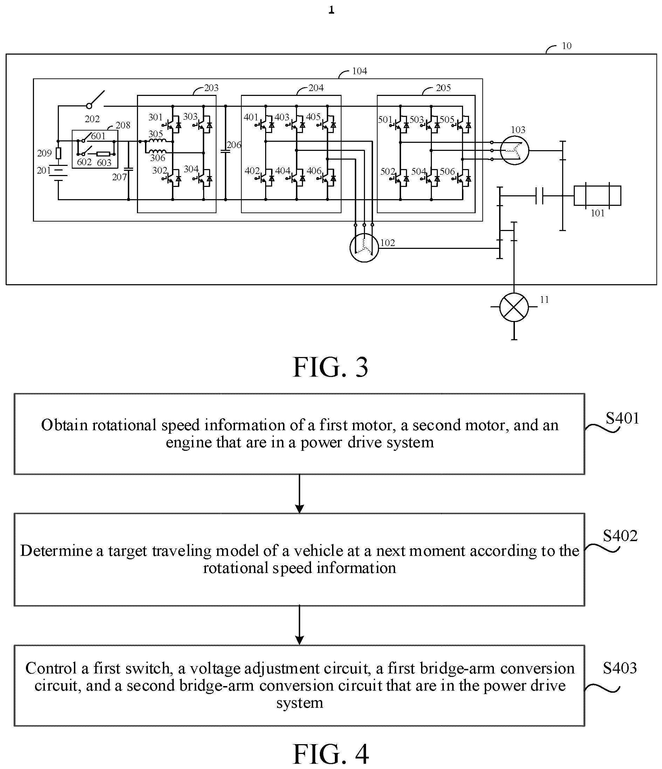

FIG. 3 is another schematic diagram of a power drive circuit according to an exemplary embodiment. Referring to FIG. 3, the power drive circuit 104 further includes: a first capacitor 206. The first capacitor 206 is connected in parallel between the second end and the third end of the voltage adjustment circuit 203. The first capacitor 206 is configured to stabilize the output voltage of the voltage adjustment circuit 203, so that the power drive circuit 104 is safer and more effective.

Optionally, as shown in FIG. 3, the power drive circuit 104 further includes: a pre-charging circuit 208 and a second capacitor 207. The first end of the voltage adjustment circuit 203 is connected to the first end of the battery pack 201 through the pre-charging circuit 208, and the second capacitor 207 is connected in parallel between the first end of the voltage adjustment circuit 203 and the second end of the battery pack 201. The first end of the battery pack 201 represents a positive electrode, and the second end of the battery pack 201 represents a negative electrode.

A first end of the pre-charging circuit 208 is connected between the positive electrode of the battery pack 201 and the first switch 202, a second end of the pre-charging circuit 208 is connected to the first end of the voltage adjustment circuit 203, and the second capacitor 207 is connected in parallel between the second end of the pre-charging circuit 208 and the negative electrode of the battery pack 201.

An operating status of the pre-charging circuit 208 is controlled by the control apparatus. When the control apparatus controls the first switch 202 to be turned off, the control apparatus further controls the pre-charging circuit 208 to be started. The pre-charging circuit 208 is configured to pre-charge the second capacitor 207.

Optionally, as shown in FIG. 3, the pre-charging circuit 208 includes a second switch 601, a third switch 602, and a current limiting resistor 603. A first end of the second switch 601 is configured as a first end of the pre-charging circuit 208, a second end of the second switch 601 is configured as a second end of the pre-charging circuit 208, and a branch in which the third switch 602 is connected in series with the current limiting resistor 603 is connected in parallel to two ends of the second switch 601.

The control apparatus is specifically configured to control on or off of the second switch 601 and the third switch 602 in the pre-charging circuit 208. When controlling the first switch 202 to be turned off, the control apparatus may simultaneously control the second switch 601 to be turned off and the third switch 602 to be turned on. In this case, the battery pack 201 precharges the second capacitor 207 sequentially through the third switch 602 and the current limiting resistor 603. The control apparatus may be further configured to control the second switch 601 to be turned on and the third switch 602 to be turned off. In this case, the pre-charging circuit 208 stops pre-charging the second capacitor 207, and the entire pre-charging circuit 208 serves as a wire, so that the voltage adjustment circuit 203 is directly connected to the positive electrode of the battery pack 201.

It may be understood that, because the second capacitor 207 has a specific capacity, if the battery pack 201 is instantaneously connected to a loop, a relatively large instantaneous current is generated, and a line and the battery pack 201 may be burnt out. The control apparatus controls the pre-charging circuit 208. When the pre-charging circuit 208 is started, the current limiting resistor 603 is connected to the loop to limit the instantaneous current. After the second capacitor 207 is fully charged, the pre-charging circuit 208 is controlled to stop operating, so that the entire circuit operates normally. Therefore, the pre-charging circuit 208 can protect the power drive circuit 104.

Optionally, as shown in FIG. 3, the power drive circuit 104 further includes a fuse 209. The fuse 209 is connected in series between the first end of the battery pack 201 and the first switch 202, and the first end of the voltage adjustment circuit 203 is connected to an end of the fuse 209 away from the first end of the battery pack 201.

The first end of the battery pack 201 represents a positive electrode, that is, the fuse 209 is connected in series between the positive electrode of the battery pack 201 and the first switch 202. Therefore, the first end of the voltage adjustment circuit 203 is connected between the fuse 209 and the first switch 202, and the first end of the pre-charging circuit 208 is connected between the fuse 209 and the first switch 202. In addition, the fuse 209 is always in an operating state, to protect safety of the power drive circuit 104, so that the power drive circuit 104 can operate normally.

Further, an embodiment of the present disclosure provides a method for driving power. The method is for controlling the power drive system 10. It should be noted that, in the method, the first switch 202 may be controlled to be turned on or off according to a target traveling mode of the vehicle 1 at a next moment, and the operating statuses of the voltage adjustment circuit 203, the first bridge-arm conversion circuit 204, and the second bridge-arm conversion circuit 205 may be controlled.

A traveling mode of the vehicle 1 includes, but is not limited to, a startup mode, a startup enhancement mode, a low-speed uniform traveling mode, a high-speed uniform traveling mode, an acceleration mode, an acceleration enhancement mode, a braking energy storage mode, and a parking electricity generation mode.

In an exemplary embodiment, the method may be applied to the control apparatus.

FIG. 4 is a flowchart of a method for driving power according to an exemplary embodiment. Referring to FIG. 4, the method for driving power includes the following steps.

S401: Rotational speed information of a first motor, a second motor, and an engine that are in a power drive system is obtained.

The first motor represents a driving motor, and the second motor represents an electric generator.

S402: A target traveling mode of a vehicle at a next moment is determined according to the rotational speed information.

Specifically, the target traveling mode of the vehicle at the next moment may be determined according to gear information of the vehicle and the rotational speed information of the first motor, the second motor, and the engine.

For example, assuming that a current gear of the vehicle is 4, an obtained rotational speed of the first motor is 12000 r/min, a rotational speed of the second motor is 7000 r/min, and a rotational speed of the engine is 3400 r/min, it is determined that the vehicle enters a high-speed uniform traveling mode at the next moment.

S403: A first switch, a voltage adjustment circuit, a first bridge-arm conversion circuit, and a second bridge-arm conversion circuit that are in the power drive system are controlled, to enter the target traveling mode.

After the target traveling mode of the vehicle at the next moment is determined, operating statuses of the first switch, the voltage adjustment circuit, the first bridge-arm conversion circuit, and the second bridge-arm conversion circuit that are in the power drive system are controlled, to enter the target traveling mode.

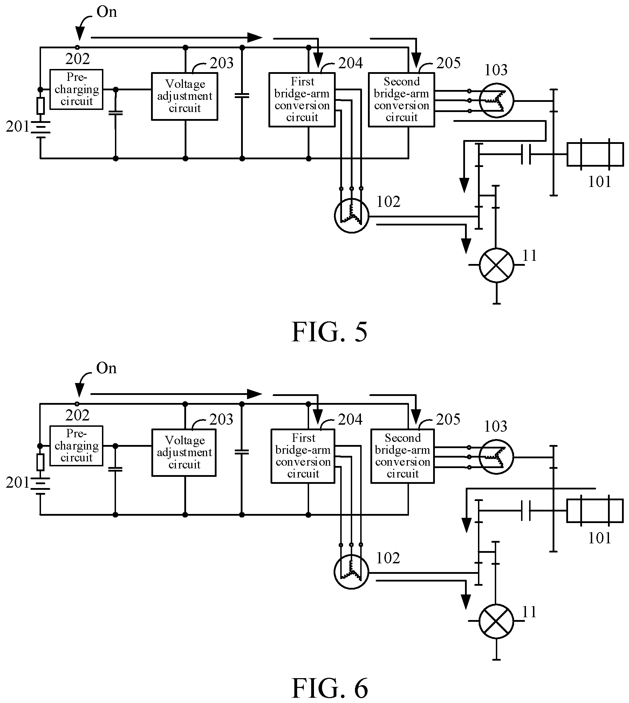

FIG. 5 to FIG. 12 are schematic diagrams of operation processes of a power drive system for different traveling modes according to exemplary embodiments. The operation processes of the power drive system are described below with reference to FIG. 5 to FIG. 12.

Referring to FIG. 5, in an exemplary embodiment, the target traveling mode at the next moment is a startup mode. In step S403, the first switch 202 is controlled to be turned on, the voltage adjustment circuit 203 is controlled not to operate, and the first bridge-arm conversion circuit 204 and the second bridge-arm conversion circuit 205 are controlled to perform direct current to alternating current conversion, to enter the startup mode. In this case, the engine 101 is in a closed state.

Specifically, the control apparatus controls the first switch 202 to be turned on, and the turned-on first switch 202 serves as a wire, so that the battery pack 201 skips the voltage adjustment circuit 203, and directly supplies electricity to the first bridge-arm conversion circuit 204 and the second bridge-arm conversion circuit 205, to enable the battery pack 201 to reach a maximum output power. The control apparatus controls the first bridge-arm conversion circuit 204 and the second bridge-arm conversion circuit 205 to perform direct current to alternating current conversion. The first bridge-arm conversion circuit 204 converts a direct current outputted by the voltage adjustment circuit 203 into a three-phase alternating current, to supply electricity to the first motor 102, so as to control the first motor 102 to operate. The second bridge-arm conversion circuit 205 converts the direct current outputted by the voltage adjustment circuit 203 into a three-phase alternating current, to supply electricity to the second motor 103, so as to control the second motor 103 to operate. In this case, the second motor 103 functions as an electric motor. The first motor 102 represents a driving motor, and the second motor 103 represents an electric generator.

For example, the first motor 102 is connected to the wheel 11 through mechanical coupling, and the second motor 103 is connected to the wheel 11 through mechanical coupling and a clutch. Therefore, the first motor 102 and the second motor 103 jointly drive the wheel 11 to rotate through the mechanical coupling and the clutch, to improve the dynamic performance of the vehicle at a startup stage.

Referring to FIG. 6, in an exemplary embodiment, the target traveling mode at the next moment is a startup enhancement mode. In step S403, the first switch 202 is controlled to be turned on, the voltage adjustment circuit 203 is controlled not to operate, the first bridge-arm conversion circuit 204 is controlled to perform direct current to alternating current conversion, and the second bridge-arm conversion circuit 205 is controlled to perform direct current to alternating current conversion or alternating current to direct current conversion, to enter the startup enhancement mode.

In comparison with the startup mode, in the startup enhancement mode, the engine 101 is in an operating state, to provide more power for the vehicle, and the startup enhancement mode is a startup mode with stronger dynamic performance.

Specifically, the control apparatus controls the first switch 202 to be turned on, and the turned-on first switch 202 serves as a wire, so that the battery pack 201 skips the voltage adjustment circuit 203, and directly supplies electricity to the first bridge-arm conversion circuit 204 and the second bridge-arm conversion circuit 205, to enable the battery pack 201 to reach a maximum output power. The control apparatus controls the first bridge-arm conversion circuit 204 to perform direct current to alternating current conversion. The first bridge-arm conversion circuit 204 converts a direct current outputted by the voltage adjustment circuit 203 into a three-phase alternating current, to supply electricity to the first motor 102, so as to control the first motor 102 to operate. The control apparatus controls the operating status of the second bridge-arm conversion circuit 205 as required, to avoid an excessively fast rotational speed or an excessively slow rotational speed of the engine 101.

Specifically, when the rotational speed of the engine 101 is excessively fast (for example, exceeds a first rotational speed threshold), the second motor 103 and the engine 101 convert excess mechanical energy generated by the engine 101 into electric energy. The control apparatus controls the second bridge-arm conversion circuit 205 to perform alternating current to direct current conversion, and the second bridge-arm conversion circuit 205 converts a three-phase alternating current outputted by the second motor 103 into a direct current, to supply electricity to the first bridge-arm conversion circuit 204 and the second bridge-arm conversion circuit 205. When the rotational speed of the engine 101 is excessively slow (for example, less than a second rotational speed threshold), the second motor 103 functions as an electric motor to assist the engine 101 in operating.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch.

Therefore, when the rotational speed of the engine 101 is excessively fast, the first bridge-arm conversion circuit 204 is controlled to perform direct current to alternating current conversion, and the second bridge-arm conversion circuit 205 is controlled to perform alternating current to direct current conversion. In this case, the engine 101 and the first motor 102 jointly drive the wheel 11 to rotate through the mechanical coupling and the clutch. When the rotational speed of the engine 101 is excessively slow, the first bridge-arm conversion circuit 204 and the second bridge-arm conversion circuit 205 are controlled to perform direct current to alternating current conversion, and the engine 101, the first motor 102, and the second motor 103 jointly drive the wheel 11 to rotate through the mechanical coupling and the clutch. This greatly improves the dynamic performance of the vehicle at the startup stage.

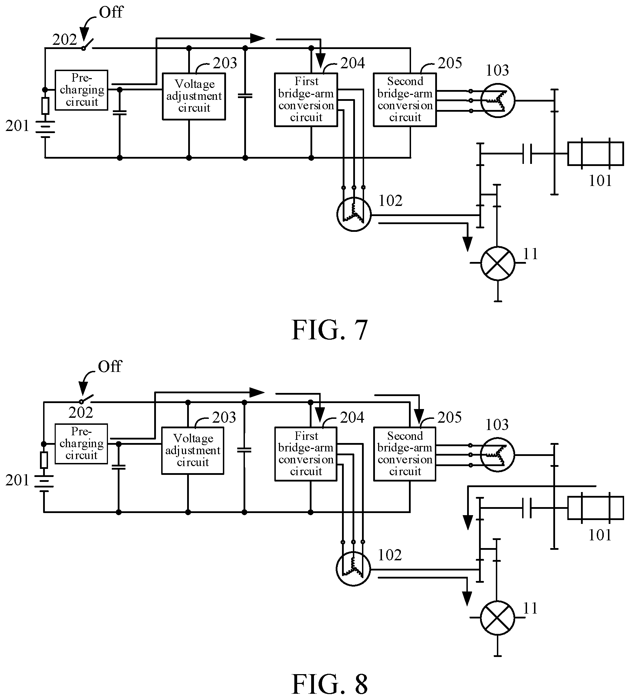

Referring to FIG. 7, in an exemplary embodiment, the target traveling mode at the next moment is a low-speed uniform traveling mode. In step S403, the first switch 202 is controlled to be turned off, the voltage adjustment circuit 203 is controlled to perform boosting, the first bridge-arm conversion circuit 204 is controlled to perform direct current to alternating current conversion, and the second bridge-arm conversion circuit 205 is controlled not to operate or perform direct current to alternating current conversion, to enter the low-speed uniform traveling mode. In this case, the engine 101 is in a closed state.

Specifically, the control apparatus controls the first switch 202 to be turned off, and the battery pack 201 supplies electricity to the first bridge-arm conversion circuit 204 and the second bridge-arm conversion circuit 205 through the voltage adjustment circuit 203. In this case, the voltage adjustment circuit 203 serves as a boost circuit. After the voltage adjustment circuit 203 performs boosting, the battery pack 201 supplies electricity to the first bridge-arm conversion circuit 204 and the second bridge-arm conversion circuit 205. The control apparatus controls the first bridge-arm conversion circuit 204 to perform direct current to alternating current conversion. The first bridge-arm conversion circuit 204 converts a direct current outputted by the voltage adjustment circuit 203 into a three-phase alternating current, to supply electricity to the first motor 102, so as to control the first motor 102 to operate, so that uniform rotation of the wheel 11 is maintained. The control apparatus controls the operating status of the second bridge-arm conversion circuit 205 as required.

Specifically, when the first motor 102 provides sufficient power for the vehicle, the control apparatus controls the second bridge-arm conversion circuit 205 not to operate. When the first motor 102 provides insufficient power for the vehicle, the control apparatus controls the second bridge-arm conversion circuit 205 to perform direct current to alternating current conversion, and the second bridge-arm conversion circuit 205 converts the direct current output by the voltage adjustment circuit 203 into the three-phase alternating current, to supply electricity to the second motor 103, so as to control the second motor 103 to operate. In this case, the second motor 103 functions as an electric motor.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch.

Therefore, when the first motor 102 provides the sufficient power for the vehicle, the first bridge-arm conversion circuit 204 performs direct current to alternating current conversion, and the second bridge-arm conversion circuit 205 does not operate. In this case, only the first motor 102 drives the wheels 11 to rotate at a constant speed through the mechanical coupling. When the first motor 102 provides the insufficient power for the vehicle, the first bridge-arm conversion circuit 204 and the second bridge-arm conversion circuit 205 perform direct current to alternating current conversion. In this case, the first motor 102 and the second motor 103 jointly drive the wheel 11 to rotate through the mechanical coupling and the clutch. This improves the dynamic performance of the vehicle at a low-speed and constant-speed stage. In addition, because the voltage adjustment circuit 203 performs boosting, an output voltage of the voltage adjustment circuit 203 is increased, and the first motor 102 is only configured to maintain uniform traveling of the vehicle, so that a loss is reduced, and economy of the vehicle is improved.

Referring to FIG. 8, in an exemplary embodiment, the target traveling mode at the next moment is a high-speed uniform traveling mode. In step S403, the first switch 202 is controlled to be turned off, the voltage adjustment circuit 203 is controlled to perform boosting, the first bridge-arm conversion circuit 204 is controlled to perform direct current to alternating current conversion, and the second bridge-arm conversion circuit 205 is controlled to perform direct current to alternating current conversion or alternating current to direct current conversion, to enter the high-speed uniform traveling mode.

In comparison with the low-speed uniform traveling mode, in the high-speed uniform traveling mode, the engine 101 is in an operating state, to provide more power for the vehicle. The high-speed uniform traveling mode is a uniform driving mode with stronger dynamic performance.

Specifically, the control apparatus controls the first switch 202 to be turned off, and the battery pack 201 supplies electricity to the first bridge-arm conversion circuit 204 and the second bridge-arm conversion circuit 205 through the voltage adjustment circuit 203. In this case, the voltage adjustment circuit 203 serves as a boost circuit. After the voltage adjustment circuit 203 performs boosting, the battery pack 201 supplies electricity to the first bridge-arm conversion circuit 204 and the second bridge-arm conversion circuit 205. The control apparatus controls the first bridge-arm conversion circuit 204 to perform direct current to alternating current conversion. The first bridge-arm conversion circuit 204 converts a direct current outputted by the voltage adjustment circuit 203 into a three-phase alternating current, to supply electricity to the first motor 102, so as to control the first motor 102 to operate, so that uniform rotation of the wheel 11 is maintained. The control apparatus controls the operating status of the second bridge-arm conversion circuit 205 as required, to avoid an excessively fast rotational speed or an excessively slow rotational speed of the engine 101.

Specifically, when the rotational speed of the engine 101 is excessively fast, the second motor 103 and the engine 101 convert excess mechanical energy generated by the engine 101 into electric energy. The control apparatus controls the second bridge-arm conversion circuit 205 to perform alternating current to direct current conversion, and the second bridge-arm conversion circuit 205 converts a three-phase alternating current outputted by the second motor 103 into a direct current, to supply electricity to the first bridge-arm conversion circuit 204 and the second bridge-arm conversion circuit 205. When the rotational speed of the engine 101 is excessively slow, the second motor 103 functions as an electric motor to assist the engine 101 in operating.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch.

Therefore, when the rotational speed of the engine 101 is excessively fast, the first bridge-arm conversion circuit 204 is controlled to perform direct current to alternating current conversion, and the second bridge-arm conversion circuit 205 is controlled to perform alternating current to direct current conversion. In this case, the engine 101 and the first motor 102 jointly drive the wheel 11 to rotate through the mechanical coupling and the clutch. When the rotational speed of the engine 101 is excessively slow, the first bridge-arm conversion circuit 204 and the second bridge-arm conversion circuit 205 are controlled to perform direct current to alternating current conversion, and the engine 101, the first motor 102, and the second motor 103 jointly drive the wheel 11 to rotate through the mechanical coupling and the clutch. This greatly improves the dynamic performance of the vehicle at a high-speed and constant-speed stage.

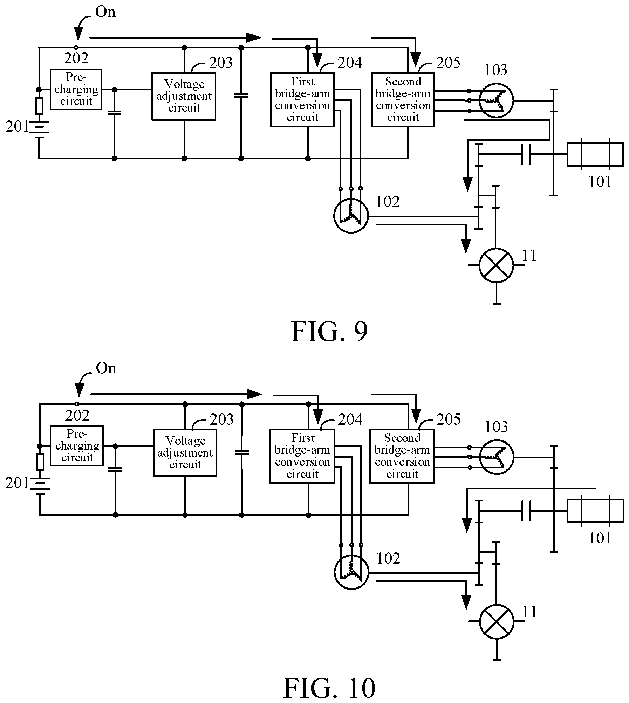

Referring to FIG. 9, in an exemplary embodiment, the target traveling mode at the next moment is an acceleration mode. In step S403, the first switch 202 is controlled to be turned on, the voltage adjustment circuit 203 is controlled not to operate, and the first bridge-arm conversion circuit 204 and the second bridge-arm conversion circuit 205 are controlled to perform direct current to alternating current conversion, to enter the acceleration mode. In this case, the engine 101 is in a closed state.

It should be noted that the control apparatus controls the voltage adjustment circuit 203 not to operate, so that a previously increased output voltage of the voltage adjustment circuit 203 is gradually reduced, and after the output voltage is reduced to a voltage of the battery pack 201, the control apparatus controls the first switch 202 to be turned on.

Specifically, the control apparatus controls the first switch 202 to be turned on, and the turned-on first switch 202 serves as a wire, so that the battery pack 201 skips the voltage adjustment circuit 203, and directly supplies electricity to the first bridge-arm conversion circuit 204 and the second bridge-arm conversion circuit 205, to enable the battery pack 201 to reach a maximum output power. The control apparatus controls the first bridge-arm conversion circuit 204 and the second bridge-arm conversion circuit 205 to perform direct current to alternating current conversion. The first bridge-arm conversion circuit 204 converts a direct current outputted by the voltage adjustment circuit 203 into a three-phase alternating current, to supply electricity to the first motor 102, so as to control the first motor 102 to operate. The second bridge-arm conversion circuit 205 converts the direct current outputted by the voltage adjustment circuit 203 into a three-phase alternating current, to supply electricity to the second motor 103, so as to control the second motor 103 to operate. In this case, the second motor 103 functions as an electric motor.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch. Therefore, the first motor 102 and the second motor 103 jointly drive the wheel 11 to rotate through the mechanical coupling and the clutch, to improve the dynamic performance of the vehicle at an acceleration stage.

Referring to FIG. 10, in an exemplary embodiment, the target traveling mode at the next moment is an acceleration enhancement mode. In step S403, the first switch 202 is controlled to be turned on, the voltage adjustment circuit 203 is controlled not to operate, the first bridge-arm conversion circuit 204 is controlled to perform direct current to alternating current conversion, and the second bridge-arm conversion circuit 205 is controlled to perform direct current to alternating current conversion or alternating current to direct current conversion, to enter the acceleration enhancement mode.

In comparison with the acceleration mode, in the acceleration enhancement mode, the engine 101 is in an operating state, to provide more power for the vehicle, and the acceleration enhancement mode is an acceleration mode with stronger dynamic performance.

It should be noted that the control apparatus controls the voltage adjustment circuit 203 not to operate, so that a previously increased output voltage of the voltage adjustment circuit 203 is gradually reduced, and after the output voltage is reduced to a voltage of the battery pack 201, the control apparatus controls the first switch 202 to be turned on.

Specifically, the control apparatus controls the first switch 202 to be turned on, and the turned-on first switch 202 serves as a wire, so that the battery pack 201 skips the voltage adjustment circuit 203, and directly supplies electricity to the first bridge-arm conversion circuit 204 and the second bridge-arm conversion circuit 205, to enable the battery pack 201 to reach a maximum output power. The control apparatus controls the first bridge-arm conversion circuit 204 to perform direct current to alternating current conversion. The first bridge-arm conversion circuit 204 converts a direct current outputted by the voltage adjustment circuit 203 into a three-phase alternating current, to supply electricity to the first motor 102, so as to control the first motor 102 to operate. The control apparatus controls the operating status of the second bridge-arm conversion circuit 205 as required, to avoid an excessively fast rotational speed or an excessively slow rotational speed of the engine 101.

Specifically, when the rotational speed of the engine 101 is excessively fast, the second motor 103 and the engine 101 convert excess mechanical energy generated by the engine 101 into electric energy. The control apparatus controls the second bridge-arm conversion circuit 205 to perform alternating current to direct current conversion, and the second bridge-arm conversion circuit 205 converts a three-phase alternating current outputted by the second motor 103 into a direct current, to supply electricity to the first bridge-arm conversion circuit 204 and the second bridge-arm conversion circuit 205. When the rotational speed of the engine 101 is excessively slow, the second motor 103 functions as an electric motor to assist the engine 101 in operating.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch.

Therefore, when the rotational speed of the engine 101 is excessively fast, the first bridge-arm conversion circuit 204 is controlled to perform direct current to alternating current conversion, and the second bridge-arm conversion circuit 205 is controlled to perform alternating current to direct current conversion. In this case, the engine 101 and the first motor 102 jointly drive the wheel 11 to rotate through the mechanical coupling and the clutch. When the rotational speed of the engine 101 is excessively slow, the first bridge-arm conversion circuit 204 and the second bridge-arm conversion circuit 205 are controlled to perform direct current to alternating current conversion, and the engine 101, the first motor 102, and the second motor 103 jointly drive the wheel 11 to rotate through the mechanical coupling and the clutch, to implement an acceleration function of the vehicle. This greatly improves the dynamic performance of the vehicle at an acceleration stage.

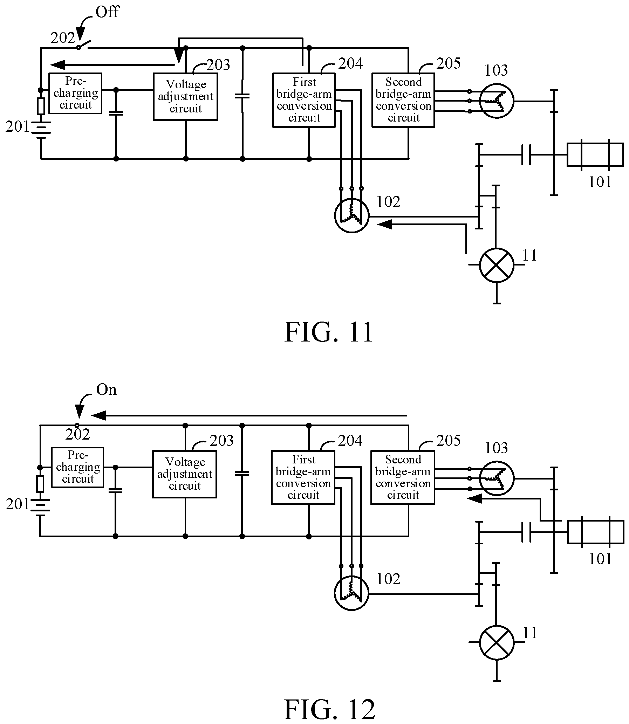

Referring to FIG. 11, in an exemplary embodiment, the target traveling mode at the next moment is a braking energy storage mode. In step S403, the first switch 202 is controlled to be turned off, the voltage adjustment circuit 203 is controlled to perform bucking, the first bridge-arm conversion circuit 204 is controlled to perform alternating current to direct current conversion, and the second bridge-arm conversion circuit 205 is controlled not to operate or perform alternating current to direct current conversion, to enter the braking energy storage mode.

Specifically, if the engine 101 is in a closed state, the control apparatus controls the first switch 202 to be turned off, and the control apparatus controls the voltage adjustment circuit 203 to perform bucking, so that an output voltage of the first bridge-arm conversion circuit 204 is reduced through the voltage adjustment circuit 203 and a reduced voltage is outputted to the battery pack 201. The control apparatus controls the first bridge-arm conversion circuit 204 to perform alternating current to direct current conversion, and controls the second bridge-arm conversion circuit 205 not to operate. In this case, the first motor 102 functions as an electric generator, the first motor 102 converts excess mechanical energy generated by the engine 101 into electric energy, and the first bridge-arm conversion circuit 204 converts a three-phase alternating current outputted by the first motor 102 into a direct current, to recycle the electric energy to the battery pack 201.

Optionally, if the engine 101 is in an operating state, the control apparatus controls the first switch 202 to be turned off, and the control apparatus controls the voltage adjustment circuit 203 to perform bucking, so that output voltages of the first bridge-arm conversion circuit 204 and the second bridge-arm conversion circuit 205 are reduced through the voltage adjustment circuit 203 and reduced voltages are outputted to the battery pack 201. The control apparatus controls the first bridge-arm conversion circuit 204 and the second bridge-arm conversion circuit 205 to perform alternating current to direct current conversion. In this case, the first motor 102 and the second motor 103 operate, and the first motor 102, the second motor 103, and the engine 101 convert excess mechanical energy generated by the engine 101 into electric energy, to recycle the electric energy to the battery pack 201.

For example, the engine 101 is connected to the wheel 11 through mechanical coupling and a clutch, the first motor 102 is connected to the wheel 11 through mechanical coupling, and the second motor 103 is connected to the wheel 11 through mechanical coupling and the clutch.

Therefore, the voltage adjustment circuit 203 is controlled to serve as a buck circuit, so that a voltage between the second end and the third end of the voltage adjustment circuit 203 is reduced and then a reduced voltage is outputted to the battery pack 201, to charge the battery pack 201. In addition, through the voltage adjustment circuit 203, stability of the output voltage for energy recycling is ensured, and the economy of the vehicle at a braking stage is improved.

Referring to FIG. 12, in an exemplary embodiment, the target traveling mode at the next moment is a parking electricity generation mode. In step S403, the first switch 202 is controlled to be turned on, the voltage adjustment circuit 203 is controlled not to operate, the first bridge-arm conversion circuit 204 is controlled not to operate, and the second bridge-arm conversion circuit 205 is controlled to perform alternating current to direct current conversion, to enter the parking electricity generation mode.

Specifically, the control apparatus controls the first switch 202 to be turned on. In this case, the turned-on first switch 202 serves as a wire, so that the second bridge-arm conversion circuit 205 skips the voltage adjustment circuit 203, and directly charges the battery pack 201 through the turned-on first switch 202. In this case, the engine 101 is in an operating state, so that the engine 101 drives the second motor 103 to generate electricity. The control apparatus controls the second bridge-arm conversion circuit 205 to perform alternating current to direct current conversion, the second motor 103 converts excess mechanical energy generated by the engine 101 into electric energy, and the control apparatus controls the second bridge-arm conversion circuit 205 to convert a three-phase alternating current outputted by the second motor 103 into a direct current, to recycle the electric energy to the battery pack 201. Therefore, the first switch 202 is controlled to be turned on, the voltage adjustment circuit 203 is skipped, and the battery pack 201 is directly charged, thereby improving a charging power and charging efficiency, shortening a charging time, and improving the economy and convenience of the vehicle at a stop electricity generation stage.

In the present disclosure, the first switch 202, the voltage adjustment circuit 203, the first bridge-arm conversion circuit 204, and the second bridge-arm conversion circuit 205 are controlled. In some application scenarios, the voltage adjustment circuit 203 may be skipped to implement a large power output of the battery pack 201, thereby releasing full performance of the vehicle. In some application scenarios, a bus voltage can be increased, energy consumption and losses can be reduced, and the economy of the vehicle can be ensured. In some application scenarios, the charging power and the charging efficiency can be improved, and the economy and the convenience of the vehicle can be improved.

In conclusion, compared with the related art, in the present disclosure, there is no need to add a small electricity supply apparatus or an energy storage device, for example, a supercapacitor, and a function of enhancing the dynamic performance can be implemented only by using the first switch, thereby reducing manufacturing costs and a volume of the vehicle.

In the present disclosure, the target traveling mode of the vehicle at the next moment may be determined according to a working condition of the vehicle, and the battery pack is controlled, according to the target traveling mode at the next moment, to directly supply electricity to the bridge-arm conversion circuit or supply electricity to the bridge-arm conversion circuit after the voltage adjustment circuit performs boosting, to implement switching between enhancing the dynamic performance and enhancing the economy of the vehicle.

In addition, the voltage adjustment circuit used in the present disclosure adopts a two-phase interleaved and parallel structure, so that an output power of the voltage adjustment circuit can reach a power that cannot be reached by an existing boost circuit, and interference is smaller. In addition, in the present disclosure, energy of the engine can be recycled, thereby improving the economy of the vehicle. In addition, in the present disclosure, the battery pack can be directly charged, which improves the charging power and efficiency, shortens the charging time, and improves the economy and the convenience of the vehicle.

According to the implementation of the technical solutions recorded in the foregoing embodiments, dynamic performance of a vehicle can be improved at a startup stage and an acceleration stage of the new energy vehicle, economy is implemented at a constant speed stage, and charging convenience is improved at a stop electricity generation stage, so that the new energy vehicle considers the dynamic performance, the economy, and the convenience. The preferred implementations of the present disclosure are described above in detail with reference to the accompanying drawings, but the present disclosure is not limited to the specific details in the above implementations. Various simple variations may be made to the technical solutions of the present disclosure within the scope of the technical idea of the present disclosure, and such simple variations shall all fall within the protection scope of the present disclosure.

In addition, it should be noted that, specific technical features described in the foregoing specific implementations may be combined in any appropriate manner without conflict. In addition, different implementations of the present disclosure may also be arbitrarily combined without departing from the idea of the present disclosure, and these combinations shall still be regarded as content disclosed in the present disclosure.

## Claims

1. A power drive circuit (104), comprising: a battery pack (201), a first switch (202), a voltage adjustment circuit (203), a first bridge-arm conversion circuit (204), and a second bridge-arm conversion circuit (205),
a first end of the voltage adjustment circuit (203) being connected to a first end of the battery pack (201), and a second end of the voltage adjustment circuit (203) being connected to a second end of the battery pack (201);
the first switch (202) being respectively connected to the first end of the battery pack (201) and a third end of the voltage adjustment circuit (203), and both the first bridge-arm conversion circuit (204) and the second bridge-arm conversion circuit (205) being connected in parallel between the second end of the voltage adjustment circuit (203) and the third end of the voltage adjustment circuit (203); and
the first bridge-arm conversion circuit (204) being configured to connect to a first motor (102) of a vehicle (1), and the second bridge-arm conversion circuit (205) being configured to connect to a second motor (103) of the vehicle (1).

2. The power drive circuit (104) according to claim 1, wherein the first bridge-arm conversion circuit (204) comprises a first switching transistor (401), a second switching transistor (402), a third switching transistor (403), a fourth switching transistor (404), a fifth switching transistor (405), and a sixth switching transistor (406),
an input end of the first switching transistor (401) is connected to the third end of the voltage adjustment circuit (203), an output end of the first switching transistor (401) is connected to an input end of the second switching transistor (402), an output end of the second switching transistor (402) is connected to the second end of the voltage adjustment circuit (203), an input end of the third switching transistor (403) is connected to the input end of the first switching transistor (401), an output end of the third switching transistor (403) is connected to an input end of the fourth switching transistor (404), an output end of the fourth switching transistor (404) is connected to the output end of the second switching transistor (402), an input end of the fifth switching transistor (405) is connected to the input end of the first switching transistor (401), an output end of the fifth switching transistor (405) is connected to an input end of the sixth switching transistor (406), and an output end of the sixth switching transistor (406) is connected to the output end of the second switching transistor (402), and
a first electricity supply end of the first motor (102) is connected to the output end of the first switching transistor (401), a second electricity supply end of the first motor (102) is connected to the output end of the third switching transistor (403), and a third electricity supply end of the first motor (102) is connected to the output end of the fifth switching transistor (405).

3. The power drive circuit (104) according to claim 1 or 2, wherein the second bridge-arm conversion circuit (205) comprises a seventh switching transistor (501), an eighth switching transistor (502), a ninth switching transistor (503), a tenth switching transistor (504), an eleventh switching transistor (505), and a twelfth switching transistor (506),
an input end of the seventh switching transistor (501) is connected to the third end of the voltage adjustment circuit (203), an output end of the seventh switching transistor (501) is connected to an input end of the eighth switching transistor (502), an output end of the eighth switching transistor (502) is connected to the second end of the voltage adjustment circuit (203), an input end of the ninth switching transistor (503) is connected to the input end of the seventh switching transistor (501), an output end of the ninth switching transistor (503) is connected to an input end of the tenth switching transistor (504), an output end of the tenth switching transistor (504) is connected to the output end of the eighth switching transistor (502), an input end of the eleventh switching transistor (505) is connected to the input end of the seventh switching transistor (501), an output end of the eleventh switching transistor (505) is connected to an input end of the twelfth switching transistor (506), an output end of the twelfth switching transistor (506) is connected to the output end of the eighth switching transistor (502), and a first electricity supply end of the second motor (103) is connected to the output end of the seventh switching transistor (501), and
a second electricity supply end of the second motor (103) is connected to the output end of the ninth switching transistor (503), and a third electricity supply end of the second motor (103) is connected to the output end of the eleventh switching transistor (505).

4. The power drive circuit (104) according to any one of claims 1 to 3, wherein the voltage adjustment circuit (203) comprises a thirteenth switching transistor (301), a fourteenth switching transistor (302), a fifteenth switching transistor (303), a sixteenth switching transistor (304), a first inductor (305), and a second inductor (306), and
an input end of the thirteenth switching transistor (301) and/or an input end of the fifteenth switching transistor (303) are/is configured as the third end of the voltage adjustment circuit (203), an output end of the thirteenth switching transistor (301) is connected to an input end of the fourteenth switching transistor (302), an output end of the fourteenth switching transistor (302) and/or an output end of the sixteenth switching transistor (304) are/is configured as the second end of the voltage adjustment circuit (203), the input end of the fifteenth switching transistor (303) is connected to the input end of the thirteenth switching transistor (301), an output end of the fifteenth switching transistor (303) is connected to an input end of the sixteenth switching transistor (304), the output end of the sixteenth switching transistor (304) is connected to the output end of the fourteenth switching transistor (302), a first end of the first inductor (305) is connected to the output end of the thirteenth switching transistor (301), a second end of the first inductor (305) and/or a second end of the second inductor (306) are/is configured as the first end of the voltage adjustment circuit (203), a first end of the second inductor (306) is connected to the output end of the fifteenth switching transistor (303), and the second end of the second inductor (306) is connected to the second end of the first inductor (305).

5. The power drive circuit (104) according to any one of claims 1 to 4, further comprising a first capacitor (206),
the first capacitor (206) being connected in parallel between the second end of the voltage adjustment circuit (203) and the third end of the voltage adjustment circuit (203).

6. The power drive circuit (104) according to any one of claims 1 to 5, further comprising a pre-charging circuit (208) and a second capacitor (207),
the first end of the voltage adjustment circuit (203) being connected to the first end of the battery pack (201) through the pre-charging circuit (208), and the second capacitor (207) being connected in parallel between the first end of the voltage adjustment circuit (203) and the second end of the battery pack (201).

7. The power drive circuit (104) according to claim 6, wherein the pre-charging circuit (208) comprises a second switch (601), a third switch (602), and a current limiting resistor (603), and
a first end of the second switch (601) is configured as a first end of the pre-charging circuit (208), a second end of the second switch (601) is configured as a second end of the pre-charging circuit (208), and a branch in which the third switch (602) is connected in series with the current limiting resistor (603) is connected in parallel to two ends of the second switch (601).

8. The power drive circuit (104) according to any one of claims 1 to 7, further comprising a fuse (209),
the fuse (209) being connected in series between the first end of the battery pack (201) and the first switch (202), and the first end of the voltage adjustment circuit (203) being connected to an end of the fuse (209) away from the first end of the battery pack (201).

9. A power drive system (10), comprising: an engine (101), a first motor (102), a second motor (103), and the power drive circuit (104) according to any one of claims 1 to 8, wherein the first motor (102) is respectively connected to the second motor (103) and the engine (101), and the second motor (103) is connected to the engine (101).

10. A method for driving power, for controlling the power drive system (10) according to claim 9, the method for driving power comprising:
obtaining rotational speed information of the first motor (102), the second motor (103), and the engine (101) that are in the power drive system (10);
determining a target traveling mode of a vehicle (1) at a next moment according to the rotational speed information; and
controlling the first switch (202), the voltage adjustment circuit (203), the first bridge-arm conversion circuit (204), and the second bridge-arm conversion circuit (205) that are in the power drive system (10), to enter the target traveling mode.

11. The method for driving power according to claim 10, wherein the target traveling mode is a startup mode or a startup enhancement mode, and the controlling the first switch (202), the voltage adjustment circuit (203), the first bridge-arm conversion circuit (204), and the second bridge-arm conversion circuit (205) that are in the power drive system (10), to enter the target traveling mode comprises:
controlling the first switch (202) to be turned on, controlling the voltage adjustment circuit (203) not to operate, and controlling the first bridge-arm conversion circuit (204) and the second bridge-arm conversion circuit (205) to perform direct current to alternating current conversion, to enter the startup mode; or
controlling the first switch (202) to be turned on, controlling the voltage adjustment circuit (203) not to operate, controlling the first bridge-arm conversion circuit (204) to perform direct current to alternating current conversion, and controlling the second bridge-arm conversion circuit (205) to perform direct current to alternating current conversion or alternating current to direct current conversion, to enter the startup enhancement mode.

12. The method for driving power according to claim 10, wherein the target traveling mode is a low-speed uniform traveling mode, a high-speed uniform traveling mode, an acceleration mode, or an acceleration enhancement mode, and the controlling the first switch (202), the voltage adjustment circuit (203), the first bridge-arm conversion circuit (204), and the second bridge-arm conversion circuit (205) that are in the power drive system (10), to enter the target traveling mode comprises:
controlling the first switch (202) to be turned off, controlling the voltage adjustment circuit (203) to perform boosting, controlling the first bridge-arm conversion circuit (204) to perform direct current to alternating current conversion, and controlling the second bridge-arm conversion circuit (205) not to operate or perform direct current to alternating current conversion, to enter the low-speed uniform traveling mode; or
controlling the first switch (202) to be turned off, controlling the voltage adjustment circuit (203) to perform boosting, controlling the first bridge-arm conversion circuit (204) to perform direct current to alternating current conversion, and controlling the second bridge-arm conversion circuit (205) to perform direct current to alternating current conversion or alternating current to direct current conversion, to enter the high-speed uniform traveling mode; or
controlling the first switch (202) to be turned on, controlling the voltage adjustment circuit (203) not to operate, and controlling the first bridge-arm conversion circuit (204) and the second bridge-arm conversion circuit (205) to perform direct current to alternating current conversion, to enter the acceleration mode; or
controlling the first switch (202) to be turned on, controlling the voltage adjustment circuit (203) not to operate, controlling the first bridge-arm conversion circuit (204) to perform direct current to alternating current conversion, and controlling the second bridge-arm conversion circuit (205) to perform direct current to alternating current conversion or alternating current to direct current conversion, to enter the acceleration enhancement mode.

13. The method for driving power according to claim 10, wherein the target traveling mode is a braking energy storage mode or a parking electricity generation mode, and the controlling the first switch (202), the voltage adjustment circuit (203), the first bridge-arm conversion circuit (204), and the second bridge-arm conversion circuit (205) that are in the power drive system (10), to enter the target traveling mode comprises:
controlling the first switch (202) to be turned off, controlling the voltage adjustment circuit (203) to perform bucking, controlling the first bridge-arm conversion circuit (204) to perform alternating current to direct current conversion, and controlling the second bridge-arm conversion circuit (205) not to operate or perform alternating current to direct current conversion, to enter the braking energy storage mode; or
controlling the first switch (202) to be turned on, controlling the voltage adjustment circuit (203) not to operate, controlling the first bridge-arm conversion circuit (204) not to operate, and controlling the second bridge-arm conversion circuit (205) to perform alternating current to direct current conversion, to enter the parking electricity generation mode.

14. A vehicle (1), comprising:
a wheel (11); and
the power drive system (10) according to claim 9, the engine (101), the first motor (102), and the second motor (103) that are in the power drive system (10) being all connected to the wheel (11).

15. The vehicle (1) according to claim 14, further comprising:
a control apparatus, connected to the first switch (202), the voltage adjustment circuit (203), the first bridge-arm conversion circuit (204), and the second bridge-arm conversion circuit (205) that are in the power drive system (10), the control apparatus being configured to control the first switch (202), the voltage adjustment circuit (203), the first bridge-arm conversion circuit (204), and the second bridge-arm conversion circuit (205).
